# EUROPÄISCHE PATENTSCHRIFT

(11) **EP 1 292 958 B1**
(45) Veröffentlichungstag und Bekanntmachung des Hinweises auf die Patenterteilung: **03.12.2003**
(21) Anmeldenummer: 01955188.6
(22) Anmeldetag: 06.06.2001
(51) Int. Cl.: G05B 19/042, G05B 19/05

(54) **VERFAHREN ZUR ORGANISATION DES ABLAUFS ELEKTRONISCH GESTEUERTER SCHALTVORGÄNGE**
METHOD FOR ORGANIZING THE EXECUTION OF ELECTRONICALLY CONTROLLED SWITCHING PROCESSES
PROCEDE D'ORGANISATION DU DEROULEMENT DE PROCESSUS DE COMMUTATION COMMANDES ELECTRONIQUEMENT

(30) Priorität: 07.06.2000 DE 10028140
(43) Veröffentlichungstag der Anmeldung: 19.03.2003
(73) Patentinhaber: SIEMENS AKTIENGESELLSCHAFT, 80333 München (DE)
(72) Erfinder: GRAF, Rüdiger, 90616 Neuhof (DE); RUPPRECHT, Georg, 90409 Nürnberg (DE)
(86) Internationale Anmeldenummer: DE0102101
(87) Internationale Veröffentlichungsnummer: WO01095353

(56) Entgegenhaltungen:
- KURAPATI ET AL: "Design of sequence controllers using Petri net models" SYSTEMS, MAN AND CYBERNETICS, 1995. INTELLIGENT SYSTEMS FOR THE 21ST CENTURY., IEEE INTERNATIONAL CONFERENCE ON VANCOUVER, BC, CANADA 22-25 OCT. 1995, NEW YORK, NY, USA,IEEE, US, 22. Oktober 1995 (1995-10-22), Seiten 3469-3474, XP010194833 ISBN: 0-7803-2559-1
- COTTET F: "INTEGREZ UNE APPLICATION D'AUTOMATISMES SUR IN PC" MESURES REGULATION AUTOMATISME, CFE. PARIS, FR, Bd. 60, Nr. 682, 1. Februar 1996 (1996-02-01), Seiten 69-70,73-74, XP000556559 ISSN: 0755-219X
- BOUCHER ET AL: "Developing a class of sequential function charts from Petri nets" COMPUTER INTEGRATED MANUFACTURING AND AUTOMATION TECHNOLOGY, 1994., PROCEEDINGS OF THE FOURTH INTERNATIONAL CONFERENCE ON TROY, NY, USA 10-12 OCT. 1994, LOS ALAMITOS, CA, USA,IEEE COMPUT. SOC, 10. Oktober 1994 (1994-10-10), Seiten 163-168, XP010133355 ISBN: 0-8186-6510-6
- PANETTO ET AL: "Contribution of the Grafcet model to synchrony in discrete events systems modelling" INDUSTRIAL ELECTRONICS, CONTROL AND INSTRUMENTATION, 1994. IECON '94., 20TH INTERNATIONAL CONFERENCE ON BOLOGNA, ITALY 5-9 SEPT. 1994, NEW YORK, NY, USA,IEEE, 5. September 1994 (1994-09-05), Seiten 1527-1532, XP010137609 ISBN: 0-7803-1328-3
- FERREIRA ET AL: "Automatic generation of C-code or PLD circuits under SFC graphical environment" INDUSTRIAL ELECTRONICS, 1997. ISIE '97., PROCEEDINGS OF THE IEEE INTERNATIONAL SYMPOSIUM ON GUIMARAES, PORTUGAL 7-11 JULY 1997, NEW YORK, NY, USA,IEEE, US, 7. Juli 1997 (1997-07-07), Seiten SS181-SS185, XP010265161 ISBN: 0-7803-3936-3
- HEEGREN ET AL: "Synchronised execution of discrete event models using sequential function charts" DECISION AND CONTROL, 1999. PROCEEDINGS OF THE 38TH IEEE CONFERENCE ON PHOENIX, AZ, USA 7-10 DEC. 1999, PISCATAWAY, NJ, USA,IEEE, US, 7. Dezember 1999 (1999-12-07), Seiten 2237-2242, XP010375704 ISBN: 0-7803-5250-5

## Beschreibung

Die Erfindung betrifft ein Verfahren gemäß dem Oberbegriff des Anspruchs 1. Darüber hinaus betrifft die Erfindung ein Software-Werkzeug, welches zur Durchführung des Verfahrens geeignet ist, und ferner ein Programmiergerät mit einem derartigen Software-Werkzeug.

Die Organisation von Ablaufsteuerungen wird in der Regel über entsprechende Programmierungen in einem Programmiergerät vorgegeben, wobei die hier vereinfachend Schaltvorgänge genannten Abläufe mittels verschiedener Aktoren, beispielsweise auch unter Auswertung von Sensordaten, durchgeführt werden. Ein zu steuernder Prozess wird dabei durch entsprechende Funktions- und Datenmodelle grafisch und darüber auch programmiertechnisch in dem Programmiergerät oder Personalcomputer abgebildet, wobei insbesondere im Funktionsmodell die Verarbeitungsvorgänge im Zentrum stehen und dabei so genannte Netzknoten bilden.

Die Datenströme werden durch Steuerdaten oder Ereignisse gesteuert. Die Netzknoten können dabei zwar verfeinert und zur Abbildung auch komplexer Vorgänge herangezogen werden, jedoch müssen eine Reihe von Randbedingungen eingehalten werden, um die Übereinstimmung mit den tatsächlichen Vorgängen zu gewährleisten. Die Ablaufsteuerungen können hier auch in an sich bekannter Weise als so genannte Petrinetze dargestellt werden Siehe z. B. KURAPATI ET AL: 'Design of sequence controllers using Petri net models' SYSTEMS, MAN AND CYBERNETICS, 1995. INTELLIGENT SYSTEMS FOR THE 21 ST CENTURY., IEEE INTERNATIONAL CONFERENCE ON VANCOUVER, BC, CANADA 22-25 OCT. 1995, NEW YORK, NY, USA,IEEE, US, 22. Oktober 1995 (1995-10-22), Seiten 3469-3474, XP010194833 ISBN: 0-7803-2559-1, die eine strenge Formalisierung aufweisen, grafisch und auch analytisch darstellbar sind und leicht der Bearbeitung durch das Programmiergerät zugänglich gemacht werden können. Diese auf Petrinetze basierenden Darstellungen sind beispielsweise in der Industrienorm DIN EN 61131 beschrieben und im Wesentlichen aus Gruppen von Schritten und Transitionen (Fortschaltbedingungen) gebildet, die sich mit gerichteten Verbindungen verknüpfen bzw. markieren lassen. Jeder Schritt besteht dabei aus einzelnen Aktionen und zu jeder Transition gehört eine Transitionsbedingung.

Bei den bekannten Petrinetzen sind dabei sowohl parallele als auch sequentielle Abläufe der Steuerung beschreibbar, wobei diese Methodik es an sich auch zulässt, dass einzelne Stellen des Netzes und damit auch Schritte der Ablaufsteuerung mehrfach markiert sind. Aus der Sicht einer Ablaufsteuerung macht dies jedoch in der Regel keinen Sinn, wobei dies nicht nur für denselben Schritt, sondern sogar für in linearen Abschnitten hintereinander liegende Schritte gilt. Das bedeutet, dass zwar eine Verzweigung auf parallele Abläufe zulässig ist, diese Parallelität aber auch zwingend geordnet wieder zusammenzuführen ist, da ein Wechsel in einen parallelen Ablauf hinein an sich unzulässig ist.

Der Erfindung liegt daher die Aufgabe zugrunde, ein Verfahren zur Organisation des Ablaufs elektronisch gesteuerter Schaltvorgänge zu schaffen, bei dem sichergestellt ist, dass nur zulässige Netzzustände in einer Ablaufsteuerung eingestellt sind. Darüber hinaus ist ein Software-Werkzeug zur Durchführung des Verfahrens anzugeben.

Gemäß der Erfindung ist in vorteilhafter Weise ein Verfahren zur Organisation des Ablaufs elektronisch gesteuerter Schaltvorgänge, bei dem sequentielle und/oder parallele Schritte durch vorgegebene Transitionsbedingungen aktiviert und mit dem Fortschalten des Ablaufs deaktiviert werden, dadurch weitergebildet, dass während der Aktivierung eines Schrittes eine Deaktivierung unzulässiger paralleler Schritte durchgeführt wird, wobei die jeweils unzulässigen Schritte vorab in einer gespeicherten Matrix hinterlegt worden sind. Im Hinblick auf das Software-Werkzeug weist dieses die in Anspruch 5 angegebenen Maßnahmen auf.

Die Aktivierung von Schritten, die eventuell zu unzulässigen Kombinationen führt, erfolgt beispielsweise durch einen unzulässigen grafischen Übergang im Ablaufplan, eine Aktivierung von außen oder durch eine Aktivierung durch Schritttätigkeit. Hierfür kommt in erster Linie z. B. ein Handeingriff in Frage, d. h., das Bedienpersonal an der zu steuernden Maschine gibt das explizite Signal zum Aktivieren eines bestimmten Schrittes. Aber je nach den Fähigkeiten des zugrunde liegenden Programmiersystems in der elektronischen Datenverarbeitung kann dies auch durch ein gezieltes Aktivieren als Tätigkeit eines anderen Schrittes erfolgen.

Zwar kann man potentielle Konfliktsituationen bei der Aktivierung der Schritte eventuell bereits in der Grafik des Ablaufplans zum Erstellungszeitpunkt dieses Plans erkennen. Dies ist aber für die allermeisten Anwendungsfälle weder hinreichend sicher noch unbedingt notwendig. Zum einen muss ein derartiger grafischer Übergang dynamisch nicht zwangsweise zu einem Zeitpunkt auftreten, zu dem dieser parallele Zweig sozusagen besetzt ist, zum anderen kann durch die oben genannten externen Eingriffsmöglichkeiten auch bei konfliktfreier Grafik die Fehlersituation entstehen.

Die erfindungsgemäße Lösung des dargestellten Problems ist vor allem deshalb vorteilhaft, da nicht, wie bisher zum Teil notwendig, ganz auf Parallelität im Ablaufplan verzichtet werden muss. Auch ist es nicht mehr notwendig, die zu steuernden Maschinen so abzusichern, dass sie auf auftretende Konflikte gutmütig reagieren.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird anhand des in der Zeichnung dargestellten Ausführungsbeispiels erläutert. Es zeigen:
- Figur 1: eine Darstellung eines Ablaufplans für eine Steuerungsaufgabe als Petrinetz mit der Aktivierung eines ersten Schritts;
- Figur 2: die Darstellung nach der Figur 1 mit einer nachfolgenden Aktivierung eines weiteren Schritts und
- Figur 3: die Darstellung nach der Figur 1 mit einer weiteren nachfolgenden Aktivierung eines Schritts mit einer Deaktivierung unzulässiger paralleler Schritte.

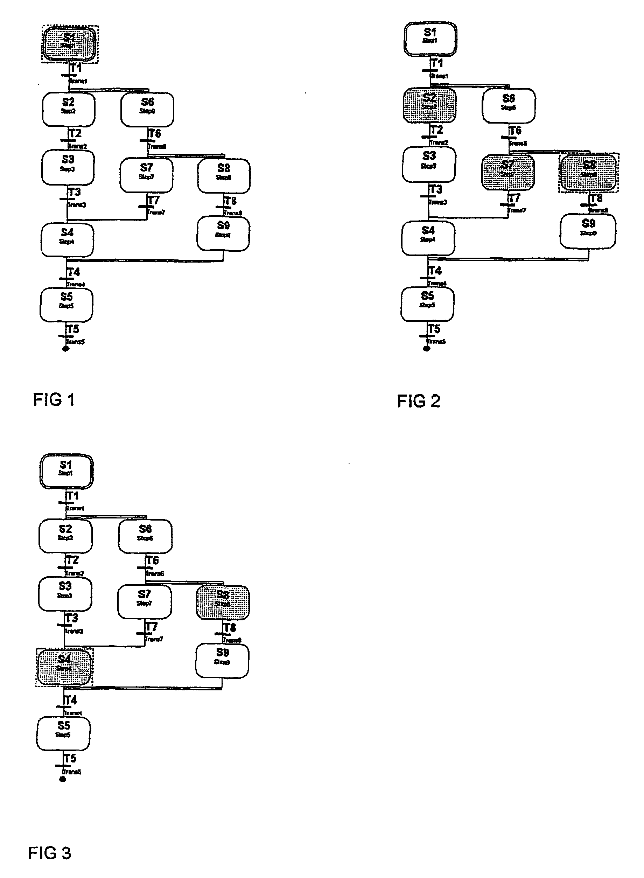

In Figur 1 ist die grafische Darstellung eines Petrinetzes zur Beschreibung einer Ablaufsteuerung für einen industriellen Prozess oder eine Maschinensteuerung gezeigt. Zur Darstellung und für die weitere Bearbeitung des Petrinetzes ist ein Software-Werkzeug vorgesehen, das auf einem Programmiergerät ablauffähig ist. Auf den eigentlichen Steuervorgang mit Schritten zur Betätigung von Ventilen, Pumpen, Motoren oder dergleichen braucht hier zum Verständnis der Erfindung nicht näher eingegangen werden.

Mit den Elementen des Petrinetzes werden Schritte S1 bis S9 beschrieben, die mit gerichteten Verbindungen über Transitions- oder Fortschaltbedingungen T1 bis T9 miteinander verknüpft sind. Jeder Schritt S1 bis S9 kann dabei aus einzelnen Aktionen bestehen und zu jeder Transition gehört eine Transitionsbedingung. Ein Schritt S1 bis S9 ist entweder aktiv oder deaktiv und gibt entsprechende in der Regel binäre oder digitale Daten als Ausgangsgrößen ab. Zusätzlich kann eine Zeitüberwachung bei der Aktivierung der einzelnen Schritte S1 bis S9 erfolgen. Auf jeden der Schritte S1 bis S9 muss dabei eine Transition T1 bis T9 folgen, wobei eine Transition immer eine Bedingung für den Übergang zum nächsten im Programmablauf vorgesehenen Schritt darstellt. Die Erfüllung einer Transition T1 bis T9 führt zur Aktivierung aller im Ablaufplan unmittelbar folgender Schritte und zur Deaktivierung aller der Transition unmittelbar vorgelagerten Schritte.

Bei der Darstellung nach der Figur 1 sind parallele Verzweigungen bei den Schritten S5 und S7 sowie S8 und S9 angegeben. Es handelt sich hierbei um eine UND-Verzweigung der Schritte, bei der nach Erfüllung der Transition T1 die Schritte S2 und S6 und nach Erfüllung der Transition T6 die Schritte S7 und S8 aktivierbar sind.

Nach der Figur 1 wird zunächst der Schritt S1 als so genannter Initialschritt aktiviert, wobei die Aktivierung durch eine graue Hinterlegung des Kastensymbols für den Schritt S1 gezeigt ist.

Es ist im weiteren Ablauf des Steuerprogramms nicht ausgeschlossen, dass, wie in der Beschreibungseinleitung beschrieben, z. B. durch Handgriff des Bedienpersonals an der zu steuernden Maschine ein Signal zum Aktivieren eines bestimmten unzulässigen Schrittes erfolgt oder in der elektronischen Datenverarbeitung ein solches gezieltes Aktivieren als Tätigkeit eines anderen Schrittes hervorgerufen wird. Beispielsweise wäre es dann möglich, dass durch einen der zuvor beschriebenen Vorgänge gleichzeitig die Schritte S2, S4 und S9 in der Darstellung nach der Figur 1 in unzulässiger Weise aktiviert sind. Dies soll verhindert werden.

Ausgehend vom aktiven Schritt S1 nach der Figur 1 kann durch reguläre Schaltvorgänge auch die in Figur 2 beispielhaft gezeigte, dynamisch folgende gültige Situation entstehen, dass die Schritte S2, S7 und S8 aktiv sind. Falls nun die Transition T7 schaltet, wird natürlich der Schritt S4 aktiviert und der Schritt S7 deaktiviert. Dies würde aber nun zur üblicherweise unerwünschten Situation führen, dass nach wie vor die Schritte S2 und S8 und jedoch zusätzlich der Schritt S4 aktiv sind.

Es ist nun möglich, solche Konfliktsituationen dynamisch zu erkennen und automatisch nach vorgegebenen Regeln zu beseitigen, wodurch sichergestellt ist, dass immer nur zulässige Netzzustände eingestellt sind. Der Grundgedanke ist hierbei, dass jeder Schritt S1 bis S9 durch die Vorgabe des steuernden Prozesses das Wissen hat, welche Schritte parallel zu ihm selbst aktiv sein dürfen.

Für die Realisierung erfolgt eine Zweiteilung der Aufgabe. Zum einen wird zum Projektierungszeitpunkt ausgehend vom grafischen Netzaufbau der Ablaufsteuerung eine Matrix erstellt, in der zu jedem Schritt S1 bis S9 diejenigen anderen Schritte markiert sind, die nicht gleichzeitig aktiviert sein dürfen. Zum anderen wird zur Laufzeit bei jeder Aktivierung eines Schrittes S1 bis S9 diese Matrix geprüft und jeder in Konflikt stehende Schritt S1 bis S9 zwangsweise deaktiviert. Bei der Deaktivierung gelten hierbei die üblichen Regeln, so dass sich dies wie ein normaler Schaltvorgang darstellt.

Anhand des Ausführungsbeispiels nach der Figur 2 ermittelt das System nun selbständig, dass Schritt S2 nicht gleichzeitig mit Schritt S4 aktiv sein darf und führt eine automatische Deaktivierung von Schritt S2 herbei. Dadurch stellt sich der in Figur 3 gezeigte korrekte Zustand mit den aktiven Schritten S4 und S8 ein. Bei jeder Aktivierung eines der Schritte S1 bis S9 wird somit zwangsweise jeder unerlaubte Parallelschritt deaktiviert, wobei dieses Verfahren unabhängig von der Art der Aktivierung, wie grafischer Übergang, Aktivierung von außen oder Aktivierung durch Schritttätigkeit, angewandt werden kann.

## Patentansprüche

1. Verfahren zur Organisation des Ablaufs elektronisch gesteuerter Schaltvorgänge, bei dem sequentielle und/oder parallele Schritte (S1 bis S9) durch vorgegebene Transitionsbedingungen (T1 bis T9) aktiviert und mit dem Fortschalten des Ablaufs deaktiviert werden, **dadurch gekennzeichnet, dass** während der Aktivierung eines Schrittes (S1 bis S9) eine Deaktivierung unzulässiger paralleler Schritte durchgeführt wird, wobei die jeweils unzulässigen Schritte vorab in einer gespeicherten Matrix hinterlegt worden sind.

2. Verfahren nach Anspruch 1, **dadurch gekennzeichnet, dass** bei der Aktivierung des jeweiligen Schrittes (S1 bis S9) ein Vergleich des gerade aktivierten und der bereits aktiven Schritte mit den in der gespeicherten Matrix markierten Schritten (S1 bis S9) durchgeführt wird.

3. Verfahren nach Anspruch 1 oder 2, **dadurch gekennzeichnet, dass** die Aktivierung der jeweiligen Schritte (S1 bis S9) durch eine Aktivierung von außen oder durch eine Aktivierung durch Schritttätigkeit vorgenommen wird.

4. Verfahren nach einem der vorhergehenden Ansprüche, **dadurch gekennzeichnet, dass** die Schritte (S1 bis S9) und die Transitionsbedingungen (T1 bis T9) für den Ablaufplan der Steuerung mittels eines Petrinetzes festgelegt sind.

5. Software-Werkzeug zur Organisation des Ablaufs elektronisch gesteuerter Schaltvorgänge, wobei das Software-Werkzeug sequentielle und/oder parallele Schritte (S1 bis S9) durch vorgegebene Transitionsbedingungen (T1 bis T9) aktiviert und mit dem Fortschalten des Ablaufs diese Schritte deaktiviert, **dadurch gekennzeichnet, dass** das Software-Werkzeug während der Aktivierung eines Schrittes (S1 bis S9) eine Deaktivierung unzulässiger paralleler Schritte durchführt, wobei das Software-Werkzeug die jeweils unzulässigen Schritte vorab in einer gespeicherten Matrix hinterlegt.

6. Software-Werkzeug nach Anspruch 5, **dadurch gekennzeichnet, dass** das Software-Werkzeug bei der Aktivierung des jeweiligen Schrittes (S1 bis S9) einen Vergleich des gerade aktivierten und der bereits aktiven Schritte mit den in der gespeicherten Matrix markierten Schritten (S1 bis S9) durchführt.

7. Software-Werkzeug nach Anspruch 5 oder 6, **dadurch gekennzeichnet, dass** das Software-Werkzeug die Aktivierung der jeweiligen Schritte (S1 bis S9) durch eine Aktivierung von außen oder durch eine Aktivierung durch Schritttätigkeit vornimmt.

8. Software-Werkzeug nach einem der Ansprüche 5 bis 7, **dadurch gekennzeichnet, dass** das Software-Werkzeug die Schritte (S1 bis S9) und die Transitionsbedingungen (T1 bis T9) für den Ablaufplan der Steuerung mittels eines Petrinetzes festlegt.

9. Programmiergerät mit einem Software-Werkzeug nach einem der Ansprüche 5 bis 8.

## Claims

1. Method for organizing the sequence of electronically controlled switching operations, in which sequential and/or parallel steps (S1 to S9) are activated by predefined transition conditions (T1 to T9) and are deactivated upon the progression of the sequence, **characterized in that**, during the activation of a step (S1 to S9), a deactivation of non-permitted parallel steps is effected, the respectively non-permitted steps having first been stored in a stored matrix.

2. Method according to claim 1, **characterized in that**, in the activation of the respective step (S1 to S9), the step that has just been activated and the already active steps are compared with the steps (S1 to S9) marked in the stored matrix.

3. Method according to claim 1 or 2, **characterized in that** the activation of the respective steps (S1 to S9) is effected through an external activation or through an activation through step activity.

4. Method according to one of the preceding claims, **characterized in that** the steps (S1 to S9) and the transition conditions (T1 to T9) are defined for the sequence plan of the control system by means of a Petri network.

5. Software tool for organizing the sequence of electronically controlled switching operations, the software tool activating sequential and/or parallel steps (S1 to S9) through predefined transition conditions (T1 to T9) and deactivating these steps upon the progression of the sequence, **characterized in that**, during the activation of a step (S1 to S9), the software tool effects a deactivation of non-permitted parallel steps, the software tool first storing the respectively non-permitted steps in a stored matrix.

6. Software tool according to claim 5, **characterized in that**, in the activation of the respective step (S1 to S9), the software tool compares the step that has just been activated and the already active steps with the steps (S1 to S9) marked in the stored matrix.

7. Software tool according to claim 5 or 6, **characterized in that** the software tool effects the activation of the respective steps (S1 to S9) through an external activation or through an activation through step activity.

8. Software tool according to one of claims 5 to 7, **characterized in that** the software tool determines the steps (S1 to S9) and the transition conditions (T1 to T9) for the sequence plan of the control system by means of a Petri network.

9. Programmer with a software tool according to one of claims 5 to 8.

## Revendications

1. Procédé d'organisation du déroulement de processus de commutation commandés électroniquement dans lequel on active des stades (S1 à S9) séquentiels et/ou parallèles par des conditions (T1 à T9) données à l'avance de transition et on les désactive avec la poursuite du déroulement, **caractérisé en ce que** pendant l'activation d'un stade (S1 à S9), on effectue une désactivation de stades parallèles qui ne sont pas autorisés, les stades respectivement non autorisés étant mis au préalable dans une matrice mémorisée.

2. Procédé suivant la revendication 1, **caractérisé en ce que**, lors de l'activation du stade (S1 à S9) respectif, on effectue une comparaison du stade qui vient d'être activé et des stades déjà activés avec les stades (S1 à S9) repérés dans la matrice mémorisée.

3. Procédé suivant la revendication 1 ou 2, **caractérisé en ce que** l'on effectue l'activation du stade (S1 à S9) respectif par une activation de l'extérieur ou par une activation d'une mise en activité de stade.

4. Procédé suivant l'une des revendications précédentes, **caractérisé en ce que** l'on fixe les stades (S1 à S9) et les conditions (T1 à T9) de transition pour le plan de déroulement de la commande au moyen d'un réseau de Pétri.

5. Outil logiciel pour l'organisation du déroulement de processus de commutation commandés électroniquement, l'outil logiciel activant des stades (S1 à S9) séquentiels et/ou parallèles par des conditions (T1 à T9) données à l'avance de transition et désactivant ces stades au fur et à mesure que le déroulement se poursuit, **caractérisé en ce que** l'outil logiciel effectue pendant l'activation d'un stade (S1 à S9) une désactivation de stades parallèles qui ne sont pas autorisés, l'outil logiciel mettant les stades non autorisés respectifs à l'avance dans une matrice mémorisée.

6. Outil logiciel suivant la revendication 5, **caractérisé en ce que** l'outil logiciel effectue, lors de l'activation du stade (S1 à S9) respectif, une comparaison du stade qui vient d'être activé et des stades déjà activés avec les stades (S1 à S9) repérés dans la matrice mémorisée.

7. Outil logiciel suivant la revendication 5 ou 6, **caractérisé en ce que** l'outil logiciel l'activation des stades (S1 à S9) respectifs par une activation de l'extérieur ou par une activation d'une mise en activité de stade.

8. Outil logiciel suivant l'une des revendications 5 à 7, **caractérisé en ce que** l'outil logiciel fixe les stades (S1 à S9) et les conditions (T1 à T9) de transition pour le plan de déroulement de la commande au moyen d'un réseau de Pétri.

9. Appareil de programmation ayant un outil logiciel suivant l'une des revendications 5 à 8.
